# FASCICULE DE BREVET EUROPEEN

(11) **EP 0 332 512 B1**
(45) Date de publication et mention de la délivrance du brevet: **03.02.1993**
(21) Numéro de dépôt: 89400590.9
(22) Date de dépôt: 03.03.1989
(51) Int. Cl.: C01F 17/00, C22B 59/00, C22B 3/00

(54) **Procédé d'oxydation électrochimique du cérium 3+ en cérium 4+, en émulsion**
Verfahren zur elektrochemischen Oxidation von Cer 3+ nach Cer 4+ in einer Emulsion
Process for electrochemically oxidising cerium 3+ to cerium 4+, in an emulsion

(30) Priorité: 09.03.1988 FR 8803021
(43) Date de publication de la demande: 13.09.1989
(73) Titulaire: RHONE-POULENC CHIMIE, 92408 Courbevoie Cédex (FR)
(72) Inventeur: Horbez, Dominique, F-54000 Nancy (FR); Storck, Alain, F-54140 Jarville-la-Malgrange (FR); Grosbois, Jean, F-95290 l'Isle Adam (FR)
(74) Mandataire: Dutruc-Rosset, Marie-Claude

(56) Documents cités:
- EP-A- 0 178 958
- EP-A- 0 198 736
- CHEMICAL ABSTRACTS, vol. 98, 1983, résumé no. 222790v, Columbus, Ohio, US; E.N. YAKUBOVICH et al.: "Extraction of lanthanides from sulfate media using monocarboxylic acids".
- CHEMICAL ABSTRACTS, vol. 98, 1983, page 138, résumé no. 56513k, Columbus, Ohio, US; S.M. MASLOBOEVA et al.: "Effect of temperature on the breaking of emulsions in the extraction of rare earth elements with tributyl phosphate from neutral nitrate solutions".
- CHEMICAL ABSTRACTS, vol. 100, no. 14, avril 1984, page 140, résumé no. 105869b, Columbus, Ohio, US; S.M. MASLOBOEVA et al.: "Recovery of a didymium concentrate from the rare earth elements. Pt. I. Evaluation of phase separation rates of emulsions in different extraction systems".
- CHEMICAL ABSTRACTS, vol. 94, 1981, page 440, résumé no. 163449h, Columbus, Ohio, US; D. CHEN et al.: "Structural change during the saponifaction of organophosphoric acid extractants and the composition of the extracted species".

## Description

La présente invention concerne un procédé d'oxydation électrochimique du cérium 3+ en cérium 4+, en émulsion.

L'invention s'applique plus particulièrement aux solutions de sulfate céreux.

Il est connu selon FR-A 2 570 087 d'oxyder par voie électrochimique, le cérium 3+ en cérium 4+ en milieu sulfurique.

Le procédé décrit dans FR-A 2 570 087 est caractérisé en ce que dans une première boucle de circulation on traite ladite solution dans le premier compartiment anodique d'une cellule d'électrolyse comprenant un premier compartiment anodique et un compartiment cathodique séparés par une première membrane cationique et on recycle une première partie de la solution traitée dans ledit compartiment anodique ; dans une deuxième boucle de circulation, on traite l'autre deuxième partie de solution dans un second compartiment anodique de la cellule d'électrolyse précitée et séparé du compartiment cathodique précité par une seconde membrane cationique, on recycle une partie de la solution ainsi traitée dans le second compartiment anodique et on sépare l'autre partie de la solution qui constitue la production ; on fait circuler un électrolyte dans le compartiment cathodique précité, une partie de l'électrolyte issu de ce compartiment est réunie à la solution circulant dans le premier cycle, l'autre partie étant recyclée dans le compartiment cathodique précité.

La cellule d'électrolyse comprend deux compartiments anodiques, un compartiment cathodique situé entre les deux compartiments anodiques précités, et deux membranes cationiques séparant chacun des compartiments anodiques du compartiment cathodique.

Ce type d'appareillage permet d'obtenir des rendements "Faraday" et un taux de transformation du cérium 3+ élevés.

Toutefois, son utilisation est mal adaptée lorsque l'on doit traiter des solutions à très faible concentration en cérium 3+ car, en raison de la faible densité de courant, la surface des électrodes doit être accrue si bien que la taille de l'installation devient importante.

Afin de ne pas avoir recours à une technologie lourde faisant appel à une cellule d'électrolyse à séparateurs, la demanderesse propose un nouveau procédé d'oxydation électrochimique de cérium 3+ en cérium 4+ en émulsion, caractérisé par le fait qu'il consiste à effectuer simultanément l'oxydation électrochimique du cérium 3+ en cérium 4+ en phase aqueuse sulfurique et l'extraction du cérium 4+ formé dans une phase organique extractive du cérium 4+ émulsionnée dans ladite phase aqueuse, ce qui permet d'obtenir après séparation des phases, une phase organique chargée en cérium 4+.

Le procédé de l'invention qui couple une oxydation électrochimique du cérium 3+ et une extraction simultanée sélective du cérium 4+ en phase organique permet d'obtenir un fort taux de conversion de cérium 3+ tout en ayant recours à une cellule d'électrolyse classique, sans séparateur, de technologie simple et permettant d'obtenir des surfaces spécifiques d'électrodes importantes.

On a constaté, de manière inattendue, que l'extraction du cérium 4+ en phase organique permet d'avoir des taux de conversion qu'il n'aurait jamais été possible d'atteindre dans une cellule d'électrolyse classique sans séparateur.

De plus, le procédé de l'invention en piégeant le cérium 4+ dans une phase organique dispersée, inerte électrochimiquement, permet de pallier à un inconvénient majeur d'une cellule d'électrolyse sans séparateur qui est la réduction possible à la cathode du produit formé à l'anode.

Conformément au procédé de la présente invention, on part d'une phase aqueuse constituée par une solution aqueuse acide de sulfate céreux.

Ladite solution peut être préparée à partir d'un sel de sulfate céreux anhydre ou hydraté. Sa concentration dépend de la solubilité du sulfate céreux.

On peut faire appel à une solution aqueuse ayant une concentration comprise entre 0,05 mole/litre et la concentration correspondant à la saturation de la solution en sulfate céreux à la température de travail choisie.

La borne inférieure de concentration ne présente aucun caractère critique, mais une concentration plus faible se traduit par une densité de courant plus faible.

A titre indicatif, on précisera que la concentration de la solution de sulfate céreux entre 20°C et 25°C est choisie entre 0,1 mole et 0,25 mole/litre, mais afin d'augmenter la densité de courant à l'anode, il est préférable que la concentration en sulfate céreux soit maximale et, par conséquent, supérieure ou égale à 0,2 mole/litre.

On ajoute de l'acide sulfurique en une quantité telle que la normalité de la phase aqueuse varie entre 0,5 et 5 N et, de préférence, entre 1 et 2 N. La concentration de l'acide sulfurique de départ n'est pas critique et l'on peut mettre en oeuvre de l'acide sulfurique dilué ou concentré.

L'ordre de mélange du sel de cérium 3+ et de l'acide sulfurique est indifférent.

On effectue une mise en contact de la phase aqueuse définie ci-dessus avec une phase organique contenant un agent d'extraction du cérium 4+ insoluble dans l'eau.

L'agent d'extraction mis en oeuvre dans le procédé de l'invention doit pouvoir extraire sélectivement le cérium 4+.

On peut utiliser un agent d'extraction cationique et plus particulièrement un acide organophosphoré.

On peut mentionner ceux qui répondent aux formules générales suivantes :
les dérivés phosphoriques 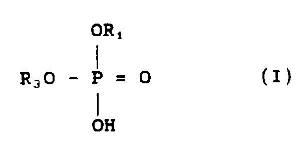
les dérivés phosphoniques 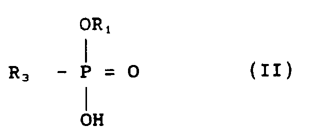
les dérivés phosphiniques 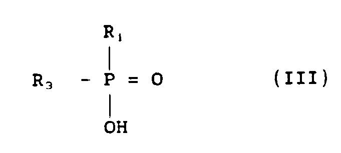
dans les formules (I) à (III) R₃ représente R₂ ou l'hydrogène et R₁ et R₂ sont des radicaux hydrocarbonés aliphatiques, cycloaliphatiques et/ou aromatiques.

Lesdits radicaux peuvent contenir de 1 à 18 atomes de carbone et au moins l'un d'entre eux comprend au moins 4 atomes de carbone.

On préfère utiliser les acides mono- ou dialkylphosphorique, mono- ou dialkylphosphonique, alkylphénylphosphonique, mono- ou dialkylphosphinique.

Encore plus préférentiellement, on fait appel à l'acide di (éthyl-2 hexyl) phosphorique et l'acide di (éthyl-2 hexyl) phosphonique.

Tous les agents d'extraction cités peuvent bien entendu être utilisés seuls ou en mélange.

La phase organique contient, le cas échéant, un diluant organique inerte vis-à-vis des agents d'extraction afin d'améliorer les propriétés hydrodynamiques de la phase organique. De nombreux solvants organiques ou leurs mélanges peuvent être utilisés en tant que diluants. Toutefois dans le cas présent, il faut choisir un diluant qui ne puisse pas être oxydé par le cérium 4+.

A titre d'exemples, on peut citer les hydrocarbures aliphatiques ou cycloaliphatiques et les hydrocarbures halogénés ou un mélange d'entre eux.

D'une manière préférentielle, on utilise un hydrocarbure aliphatique tel que, par exemple, l'hexane, l'heptane, le dodécane, les coupes pétrolières du type kérosène ou isoparaffine.

La proportion en agent d'extraction dans la phase organique n'est pas critique et peut varier dans de larges limites. Toutefois, il est, en général, avantageux que celle-ci soit la plus élevée possible. Ainsi, dans le cas des agents d'extraction cationiques, une concentration en agent d'extraction de 0,5 à 2,0 moles par litre de phase organique conduit à des conditions hydrodynamiques de séparation avantageuses.

La mise en contact de la phase aqueuse et de la phase organique s'effectue en émulsionnant la phase organique dans la phase aqueuse.

La proportion de la phase organique par rapport à la phase aqueuse peut varier dans de larges limites. La phase organique peut représenter de 5 à 66 % du volume des deux phases et, de préférence, de 33 à 66 %, et plus préférentiellement 50 %.

La mise en émulsion de la phase organique dans la phase aqueuse se fait par agitation.

Les opérations d'électrolyse et d'extraction étant concomittantes, le procédé peut être mis en oeuvre au sein d'un réacteur agité à compartiments électrolytiques séparés.

L'agitation permet non seulement d'obtenir une émulsion homogène mais, également, de favoriser le transfert de matières aux électrodes.

L'agitation est effectuée, de préférence à l'aide d'un agitateur rotatif, tel que, par example, une pale plane sous toutes ses formes, ancre, doigts, etc..., une pale inclinée, une hélice, une turbine.

Les conditions d'agitation doivent donc être relativement énergiques. La vitesse d'agitation dépend du type d'agitateur et du rapport du diamètre de l'agitateur et du réacteur. A titre d'exemple, on fixe la vitesse pour un agitateur d'un diamètre égal à 0,4 fois le diamètre d'un réacteur de 9 cm de diamètre (volume utile = 750 cm³) entre 400 et 2000 tours/minute et, de préférence, entre 600 et 1200 tours/minute.

La phase organique étant émulsionnée dans la phase aqueuse, on procède selon l'invention à l'électrolyse de la solution aqueuse acide de sulfate céreux dans les conditions données ci-après.

L'électrolyse est conduite, de préférence, à température ambiante : le plus souvent comprise entre 15°C et 25°C. Il est possible de travailler à température plus élevée, ce qui favorise la cinétique de la réaction électrochimique et le transfert de matières aux électrodes, mais le choix de la température est limité par la solubilité du sulfate céreux qui décroît lorsque la température augmente.

On définit un potentiel anodique à la limite du potentiel de dégagement d'oxygène. Généralement, on se place à moins de 50 millivolts dudit potentiel. Celui-ci dépend du milieu et des électrodes. Dans le cas d'électrodes en titane platiné, on définit un potentiel anodique de 1,7 à 1,8 volts par rapport à l'électrode normale à hydrogène.

La densité de courant au départ dépend de la concentration en sulfate céreux. Elle sera maximale pour les concentrations maximales.

Pour ce qui est de la surface des électrodes, la surface anodique doit être supérieure à la surface cathodique afin de favoriser le dégagement d'hydrogène à la cathode.

La rapport entre la surface anodique et cathodique peut varier de 1,0 à 10, mais, de préférence, il est choisi entre 1,5 et 3,0 ce qui impose de bien choisir la géomètrie des électrodes.

On peut faire appel à des électrodes sous forme de plaque, mais l'on préfère une structure plus poreuse telle qu'une toile ou une grille de métal déployé.

En ce qui concerne la nature des électrodes, elles doivent être en matériaux résistant à l'oxydation chimique et électrochimique.

La cathode peut être constituée de graphite ou de préférence d'un métal plus particulièrement le titane, le titane revêtu d'un métal précieux, par example, platine, palladium, iridium.

L'anode peut être constituée de titane, de titane revêtu d'un métal précieux tel que platine, palladium, iridium.

Compte tenu du fait que le milieu réactionnel est agité, de préférence, par une agitation centrale, il est particulièrement avantageux que chacune des deux électrodes soit constituée par une couronne centrée autour de l'agitation.

Enfin, il est à noter que dans le procédé de l'invention, on cherche à défavoriser le transfert de matière à la cathode. A cet effet, on dispose préférentiellement dans le réacteur, les électrodes de telle sorte que la cathode soit plaquée sur les parois latérales du réacteur.

La durée de l'électrolyse peut être poursuivie jusqu'à obtention d'un équilibre qui se traduit par une tension, une intensité, et des concentrations constantes.

En fin d'électrolyse, on récupère une phase organique très chargée en cérium 4+ qui est séparée de la phase aqueuse par tout moyen approprié notamment décantation.

Conformément au procédé de l'invention, on obtient un taux de conversion du cérium 3+ en cérium 4+ très important pouvant atteindre plus de 95 %.

Pour ce qui est du rendement en courant, le rendement en courant anodique est supérieur à 99 %. Le rendement "Faraday" de la cellule est supérieur à 99 % en début d'électrolyse, et proche de 90 % à l'équilibre.

Après l'opération de séparation de la phase aqueuse et de la phase organique, il est possible de réextraire le cérium 4+ en phase aqueuse par mise en contact de la phase organique avec une solution aqueuse acide telle qu'une solution aqueuse d'acide sulfurique.

La concentration de la solution aqueuse d'acide sulfurique est choisie, de préférence, entre 5 et 10 N.

Le procédé de l'invention est particulièrement intéressant car il peut être mis en oeuvre pour récupérer le cérium contenu dans les effluents ou pour séparer le cérium des autres terres rares, en partant d'une solution sulfurique.

L'expression "terres rares" désigne les lanthanides ayant des numéros atomiques de 57 à 71 inclus et l'yttrium de numéro atomique égal à 39.

La solution aqueuse de terres rares à partir de laquelle est séparé le cérium peut être celle obtenue au cours du traitement des minerais contenant les terres rares tels que la monazite, la bastnaésite.

Les exemples suivants illustrent l'invention, sans toutefois la limiter.

### Exemple 1

L'exemple illustrant l'invention est conduit dans un appareillage tel que représenté par les dessins annexés, sur lesquels :
- la figure 1 est une vue de face de la cellule d'électrolyse,
- la figure 2 est une vue de dessus de la cellule d'électrolyse.

Les opérations de formation d'émulsion et d'électrolyse sont réalisées dans la même cuve (1) qui se comporte en réacteur fermé.

Le volume total de liquide est de 0,750 litre.

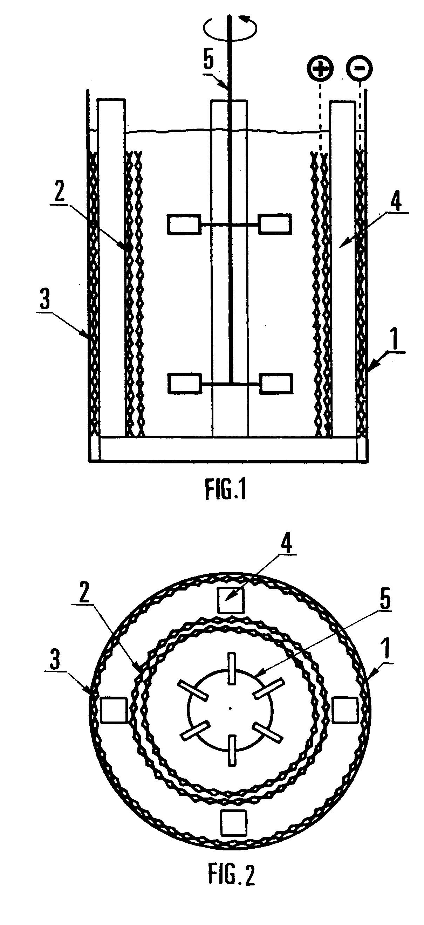

Les électrodes utilisées sont toutes les deux en titane déployé, revêtu de platine galvanique et présentent une forme circulaire telle que représentée sur la figure 2.

La surface de l'anode (2) est de 0,0734 m² et celle de la cathode (3) est de 0,0496 m², ce qui fait un rapport de surfaces d'électrodes anode/cathode de 1,48.

L'agitation centrale est effectuée à l'aide d'un agitateur à pales (5) tournant à 800 tours/minute.

La distance entre l'anode et la cathode de 9 mm est assurée à l'aide de quatre supports (4) en polypropylène répartis régulièrement dans l'intervalle situé entre l'anode et la cathode.

Dans l'essai qui suit, la phase aqueuse est constituée par 0,5 litre d'une solution de sulfate contenant 0,1 mole/l de cérium 3+ et ayant une normalité en acide sulfurique de 1 N.

La phase organique de 0,25 l est composée d'acide di(éthyl-2 hexyl) phosphorique en solution dans le kérosène à raison de 0,8 mole/litre.

La phase organique est mise en émulsion dans la phase aqueuse, par agitation. La teneur de l'émulsion en phase organique est de 33 % en volume.

On réalise l'oxydation électrochimique de cérium 3+ en cérium 4+, à température ambiante, en imposant un potentiel à l'anode de 1,78 volts/ENH.

L'électrolyse dure 60 minutes.

La phase organique se charge en cérium 4+.

Les résultats obtenus sont les suivants :
à l'équilibre :
[Ce³⁺] en phase aqueuse = 0,0146 mole/l
taux de conversion : 85,4 %
[Ce⁴⁺] en phase aqueuse = 0,0079 mole/l
[Ce⁴⁺] en phase organique = 0,155 mole/l
fraction de cérium récupérée en phase organique : 77,5 %
coefficient de partage de Ce⁴⁺ entre les 2 phases : 20

### Exemple 2

On reproduit l'exemple 1 sauf en ce qui concerne le volume des phases en présence : 0,25 l de phase aqueuse et 0,5 l de phase organique ce qui fait une teneur de l'émulsion en phase organique de 66 %.

Les résultants obtenus sont les suivants :
à l'équilibre :
[Ce³⁺] en phase aqueuse = 0,0044 mole/l
taux de conversion : 95,6 %
[Ce⁴⁺] en phase aqueuse = 0,38 10⁻³ mole/l
[Ce⁴⁺] en phase organique = 0,0476 mole/l
fraction de cérium récupérée en phase organique : 95,2 %
coefficient de partage de Ce⁴⁺ entre les 2 phases : 125
rendement en courant à l'équilibre : 88 %

Il ressort de cet exemple, qu'en augmentant la quantité de phase organique, on accroît le taux de conversion du cérium 3+ et que, par ailleurs, le rendement en courant à l'équilibre est élevé bien que l'on ait opéré en réacteur fermé.

### Exemple 3

Dans cet example, on met en présence une phase aqueuse constituée de 0,375 litre d'une solution de sulfate céreux contenant 0,2 mole/litre de cérium 3+ et ayant une normalité en acide sulfurique de 1 N et une phase organique de 0,375 litre contenant 1,2 moles/ litre d'acide di (éthyl-2 hexyl) phosphorique, par litre de kérosène : la teneur de l'émulsion en phase organique est de 50 %.

Les conditions opératoires sont celles données dans l'exemple 1.

Les résultats obtenus sont les suivants :
à l'équilibre :
[Ce³⁺] en phase aqueuse = 0,0042 mole/l
taux de conversion : 98 %
[Ce⁴⁺] en phase aqueuse = 0,0048 mole/l
[Ce⁴⁺] en phase organique = 0,191 mole/l
fraction de cérium récupérée en phase organique : 95,5 %
coefficient de partage de Ce⁴⁺ entre les 2 phases : 40

On remarque que le taux de conversion est très élevé.

### Exemple 4

Dans cet exemple, on met en présence une phase aqueuse constituée de 0,5 litre d'une solution de sulfate céreux contenant 0,2 mole/litre de cérium 3+ et ayant une normalité en acide sulfurique de 2 N et une phase organique de 0,25 litre contenant 2 moles/litre d'acide di (éthyl-2 hexyl) phosphorique, par litre de kérosène : la teneur de l'émulsion en phase organique est de 33 %.

Les conditions opératoires sont celles données dans l'exemple 1.

Les résultats obtenus sont les suivants :
à l'équilibre :
[Ce³⁺] en phase aqueuse = 0,0126 mole/l
taux de conversion : 93,7 %
[Ce⁴⁺] en phase aqueuse = 0,011 mole/l
[Ce⁴⁺] en phase organique = 0,353 mole/l
fraction de cérium récupérée en phase organique : 88,2 %
coefficient de partage de Ce⁴⁺ entre les 2 phases : 32

On note la possibilité d'obtenir selon le procédé de l'invention, une solution organique concentrée en cérium 4+.

### Essai a

A titre comparatif, on procède à l'oxydation électrochimique du cérium 3+ en cérium 4+, dans une cellule d'électrolyse classique, sans séparateur avec les électrodes définies dans l'exemple 1.

On électrolyse 0,75 litre d'une solution aqueuse de sulfate céreux contenant 0,1 mole/litre de cérium 3+ et ayant une normalité en acide sulfurique de 1 N.

On impose un potentiel à l'anode de 1,78 volts/ENH.

Les résultats obtenus sont les suivants :
à l'équilibre :
[Ce⁴⁺] = 0,077 mole/l
[Ce⁴⁺] = 0,023 mole/l
taux de conversion : 23 %

On note donc les mauvaises performances d'une telle électrolyse et l'avantage procuré par l'invention résidant en un accroissement important de taux de conversion lorsque le cérium 4+ est extrait simultanément dans la phase organique.

## Revendications

1. Procédé d'oxydation électrochimique du cérium 3+ en cérium 4+ en émulsion, caractérisé par le fait qu'il consiste à effectuer simultanément l'oxydation électrochimique du cérium 3+ en cérium 4+ en phase aqueuse sulfurique et l'extraction du cérium 4+ formé dans une phase organique extractive du cérium 4+ émulsionnée dans ladite phase aqueuse, ce qui permet d'obtenir après séparation des phases, une phase organique chargée en cérium 4+.

2. Procédé selon la revendication 1 caractérisé par le fait que la concentration de la solution de sulfate céreux est comprise entre 0,05 mole/litre et la concentration correspondant à la saturation de la solution.

3. Procédé selon l'une des revendications 1 et 2 caractérisé par le fait que l'acide sulfurique est additionné en quantité telle que la normalité de la phase aqueuse varie entre 0,5 et 5 N.

4. Procédé selon la revendication 3 caractérisé par le fait que ladite normalité est comprise entre 1 et 2 N.

5. Procédé selon l'une des revendications 1 à 4 caractérisé par le fait que l'agent d'extraction est un agent d'extraction cationique.

6. Procédé selon l'une des revendications 1 à 5 caractérisé par le fait que l'agent d'extraction est choisi parmi les acides organophosphorés de formule générale : 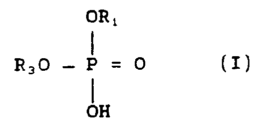 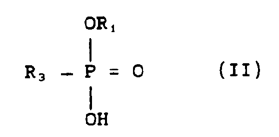 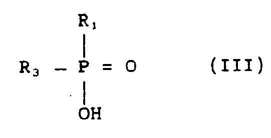 dans les formules (I) à (III), R₃ représente R₂ ou l'hydrogène et R₁ et R₂ sont des radicaux aliphatiques, cycloaliphatiques et/ou aromatiques ayant de 1 à 18 atomes de carbone et dans lesquelles au moins l'un des radicaux comprend au moins 4 atomes de carbone.

7. Procédé selon la revendication 6 caractérisé par le fait que l'agent d'extraction est un acide mono- ou dialkylphosphorique, un acide mono- ou dialkylphosphonique, un acide alkylphénylphosphonique, un acide mono- ou dialkylphosphinique.

8. Procédé selon l'une des revendications 6 et 7 caractérisé par le fait que l'agent d'extraction est l'acide di(éthyl-2 hexyl)-phosphorique ou l'acide di(éthyl-2 hexyl)phosphonique.

9. Procédé selon l'une des revendications 1 à 8 caractérisé par le fait que la phase organique contient un diluant choisi parmi les hydrocarbures aliphatiques, cycloaliphatiques, les hydrocarbures halogénés ou leurs mélanges.

10. Procédé selon la revendication 9 caractérisé par le fait que le diluant est une coupe pétrolière du type kérosène.

11. Procédé selon l'une des revendications 9 et 10 caractérisé par le fait que la phase organique représente de 5 à 66 % du volume des deux phases.

12. Procédé selon l'une des revendications 1 à 11 caractérisé par le fait que la mise en émulsion de la phase organique dans la phase aqueuse se fait par agitation.

13. Procédé selon l'une des revendications 1 à 12 caractérisé par le fait que l'électrolyse est conduite à une température ambiante.

14. Procédé selon l'une des revendications 1 à 13 caractérisé par le fait que le potentiel anodique est à la limite du potentiel de dégagement d'oxygène.

15. Procédé selon l'une des revendications 1 à 14 caractérisé par le fait que le rapport entre la surface anodique et cathodique peut varier entre 1,0 et 10.

16. Procédé selon la revendication 15 caractérisé par le fait que ledit rapport est compris entre 1,5 et 3,0.

17. Procédé selon l'une des revendications 1 à 16 caractérisé par le fait que les électrodes présentent une structure poreuse du type toile ou grille de métal déployé.

18. Procédé selon l'une des revendications 1 à 17 caractérisé par le fait que la cathode est en graphite, titane ou titane revêtu d'un métal précieux et l'anode est en titane ou titane revêtu d'un métal précieux.

19. Procédé selon la revendication 18 caractérisé par le fait que la cathode et l'anode sont en titane platiné.

20. Procédé selon l'une des revendications 1 à 19 caractérisé par le fait que l'on défavorise le transfert de matière à la cathode.

21. Procédé selon l'une des revendications 1 à 20 caractérisé par le fait que l'on sépare la phase aqueuse et la phase organique.

22. Procédé selon la revendication 21 caractérisé par le fait que l'on réextrait le cérium 4+ de la phase organique par mise en contact de la phase organique avec une solution aqueuse acide.

23. Procédé selon la revendication 22 caractérisé par le fait que la solution aqueuse acide est une solution aqueuse d'acide sulfurique ayant une normalité entre 5 et 10 N.

24. Utilisation du procédé de l'invention décrit dans l'une des revendications 1 à 23 pour récupérer le cérium contenu dans les effluents ou séparer en milieu sulfurique, le cérium des autres terres rares.

## Patentansprüche

1. Verfahren zur elektrochemischen Oxidation von Cer(III) zu Cer (IV) in Emulsion,
**dadurch gekennzeichnet,**
daß man gleichzeitig die elektrochemische Oxidation von Cer(III) zu Cer(IV) in wäßrig-schwefelsaurer Phase und die Extraktion des entstandenen Cer(IV) in eine organische Phase durchführt, die für das in der wäßrigen Phase emulgierte Cer(IV) extraktiv wirkt, wodurch es möglich wird, nach Trennung der Phasen eine organische Phase, die Cer(IV) enthält, zu erhalten.

2. Verfahren nach Anspruch 1,
**dadurch gekennzeichnet,**
daß die Konzentration der Lösung von Cer(III)-sulfat zwischen 0,05 Mol/l und der Sättigungskonzentration der Lösung liegt.

3. Verfahren nach einem der Ansprüche 1 und 2,
**dadurch gekennzeichnet,**
daß die Schwefelsäure in einer Menge zugegeben wird, daß die Normalität der wässrigen Phase zwischen 0,5 und 5 N variiert.

4. Verfahren nach Anspruch 3,
**dadurch gekennzeichnet,**
daß die Normalität zwischen 1 und 2 N liegt.

5. Verfahren nach einem der Ansprüche 1 bis 4,
**dadurch gekennzeichnet,**
daß das Extraktionsmittel ein kationisches Extraktionsmittel ist.

6. Verfahren nach einem der Ansprüche 1 bis 5,
**dadurch gekennzeichnet,**
daß das Extraktionsmittel ausgewählt ist aus den Organophosphorsäuren der allgemeinen Formeln: 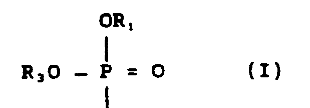 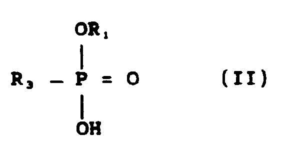 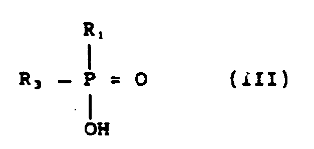 wobei in den Formeln (I) bis (III) R₃ = R₂ oder Wasserstoff bedeutet und R₁ und R₂ aliphatische, cycloaliphatische und/oder aromatische Reste mit 1 bis 18 Kohlenstoffatomen bedeuten, wobei mindestens einer der Reste mindestens 4 Kohlenstoffatome enthält.

7. Verfahren nach Anspruch 6,
**dadurch gekennzeichnet,**
daß das Extraktionsmittel eine Mono- oder Dialkylphosphorsäure, eine Mono- oder Dialkylphosphonsäure, eine Alkylphenylphosphonsäure, eine Mono- oder Dialkylphosphinsäure ist.

8. Verfahren nach einem der Ansprüche 6 und 7,
**dadurch gekennzeichnet,**
daß das Extraktionsmittel Di(2-ethyl hexyl)phosphorsäure oder Di(2-ethyl hexyl)phosphonsäure ist.

9. Verfahren nach einem der Ansprüche 1 bis 8,
**dadurch gekennzeichnet,**
daß die organische Phase ein Verdünnungsmittel enthält, ausgewählt aus den aliphatischen,cycloaliphatischen und halogenierten Konwasserstoffen und deren Gemischen.

10. Verfahren nach Anspruch 9,
**dadurch gekennzeichnet,**
daß das Verdünnungsmittel eine Erdölfraktion vom Kerosintyp ist.

11. Verfahren nach einem der Ansprüche 9 bis 10,
**dadurch gekennzeichnet,**
daß die organische Phase 5 bis 66 Vol.-% der beiden Phasen ausmacht.

12. Verfahren nach einem der Ansprüche 1 bis 11,
**dadurch gekennzeichnet,**
daß das Emulgieren der organischen Phase in der wäßrigen Phase durch Rühren erreicht wird.

13. Verfahren nach einem der Ansprüche 1 bis 12,
**dadurch gekennzeichnet,**
daß die Elektrolyse bei Umgebungstemperatur durchgeführt wird.

14. Verfahren nach einem der Ansprüche 1 bis 13,
**dadurch gekennzeichnet,**
daß das Anodenpotential an der Grenze des Potentials zur Sauerstoffentwicklung liegt.

15. Verfahren nach einem der Ansprüche 1 bis 14,
**dadurch gekennzeichnet,**
daß das Verhältnis der Anodenoberfläche zu der Kathodenoberfläche zwischen 1,0 und 10 variieren kann.

16. Verfahren nach Anspruch 15,
**dadurch gekennzeichnet,**
daß das Verhältnis zwischen 1,5 und 3,0 liegt.

17. Verfahren nach einem der Ansprüche 1 bis 16,
**dadurch gekennzeichnet,**
daß die Elektroden eine poröse Struktur vom Leinen-oder Gittertyp aus Streckmetall besitzen.

18. Verfahren nach einem der Ansprüche 1 bis 17,
**dadurch gekennzeichnet,**
daß die Kathode aus Graphit, Titan oder mit Edelmetall überzogenem Titan besteht und die Anode aus Titan oder mit Edelmetall überzogenem Titan besteht.

19. Verfahren nach Anspruch 18,
**dadurch gekennzeichnet,**
daß die Kathode und die Anode aus platiniertem Titan bestehen.

20. Verfahren nach einem der Ansprüche 1 bis 19,
**dadurch gekennzeichnet,**
daß man den Übergang von Material zu der Kathode hindert.

21. Verfahren nach einem der Ansprüche 1 bis 20,
**dadurch gekennzeichnet,**
daß man die wässrige Phase und die organische Phase trennt.

22. Verfahren nach Anspruch 21,
**dadurch gekennzeichnet,**
daß man das Cer(IV) aus der organischen Phase rückextrahiert, indem man die organische Phase mit einer wässrigen sauren Lösung zusammenbringt.

23. Verfahren nach Anspruch 22,
**dadurch gekennzeichnet,**
daß die wässrige saure Lösung eine wässrige Lösung von Schwefelsäure mit einer Normalität zwischen 5 und 10 N ist.

24. Anwendung des erfindungsgemäßen Verfahrens nach einem der Ansprüche 1 bis 23 zum Rückgewinnen des in Abwässern enthaltenen Cers oder zur Abtrennung des Cers von anderen Seltenen Erden in schwefelsaurem Medium.

## Claims

1. A process for the electrochemical oxidation of cerium 3+ to cerium 4+ in emulsion characterised in that it comprises simultaneously effecting electrochemical oxidation of the cerium 3+ to cerium 4+ in an aqueous sulphuric phase and extraction of the cerium 4+ formed in an organic phase extractive of the cerium 4+ which is emulsified in said aqueous phase, which makes it possible after separation of the phases to obtain an organic phase which is charged with cerium 4+.

2. A process according to claim 1 characterised in that the concentration of the solution of cerous sulphate is between 0.05 mole/litre and the concentration corresponding to saturation of the solution.

3. A process according to one of claims 1 and 2 characterised in that the sulphuric acid is added in an amount such that the normality of the aqueous phase varies between 0.5 and 5 N.

4. A process according to claim 3 characterised in that said normality is between 1 and 2 N.

5. A process according to one of claims 1 to 4 characterised in that the extraction agent is a cationic extraction agent.

6. A process according to one of claims 1 to 5 characterised in that the extraction agent is selected from organophosphorus acids of the general formula: 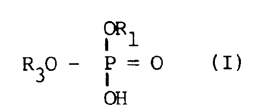 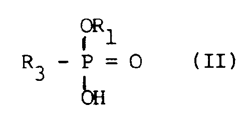 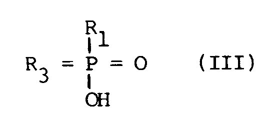 in formulae (I) to (III), R₃ represents R₂ or hydrogen and R₁ and R₂ are aliphatic, cycloaliphatic and/or aromatic radicals having from 1 to 18 carbon atoms, and in which at least one of the radicals comprises at least four carbon atoms.

7. A process according to claim 6 characterised in that the extraction agent is a mono- or dialkylphosphoric acid, a mono- or dialkylphosphonic acid, an alkylphenylphosphonic acid or a mono- or dialkylphosphinic acid.

8. A process according to one of claims 6 and 7 characterised in that the extraction agent is di-(2-ethylhexyl)-phosphoric acid or di-(2-ethylhexyl)-phosphonic acid.

9. A process according to one of claims 1 to 8 characterised in that the organic phase contains a diluent selected from aliphatic or cycloaliphatic hydrocarbons, halogenated hydrocarbons or mixtures thereof.

10. A process according to claim 9 characterised in that the diluent is a petroleum cut of the kerosene type.

11. A process according to one of claims 9 and 10 characterised in that the organic phase represents from 5 to 66% of the volume of the two phases.

12. A process according to one of claims 1 to 11 characterised in that the operation of putting the organic phase into emulsion in the aqueous phase is effected by agitation.

13. A process according to one of claims 1 to 12 characterised in that the electrolysis operation is carried out at ambient temperature.

14. A process according to one of claims 1 to 13 characterised in that the antic potential is at the limit of the oxygen liberation potential.

15. A process according to one of claims 1 to 14 characterised in that the ratio between the anodic and cathodic surface area can vary between 1.0 and 10.

16. A process according to claim 15 characterised in that said ratio is between 1.5 and 3.0.

17. A process according to one of claims 1 to 16 characterised in that the electrodes have a porous structure of the expanded metal grid or mesh type.

18. A process according to one of claims 1 to 17 characterised in that the cathode is of graphite, titanium or titanium which is coated with a precious metal and the anode is of titanium or titanium which is coated with a precious metal.

19. A process according to claim 18 characterised in that the cathode and the anode are of platinum-plated titanium.

20. A process according to one of claims 1 to 19 characterised in that the transfer of material to the cathode is discouraged.

21. A process according to one of claims 1 to 20 characterised in that the aqueous phase and the organic phase are separated.

22. A process according to claim 21 characterised in that the cerium 4+ is re-extracted from the organic phase by the organic phase being brought into contact with an acid aqueous solution.

23. A process according to claim 22 characterised in that the acid aqueous solution is an aqueous solution of sulphuric acid having a normality between 5 and 10 N.

24. Use of the process of the invention described in one of claims 1 to 23 for recovering the cerium contained in effluents or separating cerium from other rare earths in a sulphuric medium.
